(19) Europäisches Patentamt European Patent Office Office européen des brevets

(11) **EP 2 011 981 A2**

(12) **DEMANDE DE BREVET EUROPEEN**

(43) Date de publication:
**07.01.2009 Bulletin 2009/02**

(51) Int Cl.:
*F02D 35/02* *(2006.01)*    *G01M 15/08* *(2006.01)*

(21) Numéro de dépôt: **08300193.3**

(22) Date de dépôt: **24.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **07.06.2007 FR 0704080**

(71) Demandeur: **Renault S.A.S.**
**92100 Boulogne-Billancourt (FR)**

(72) Inventeurs:
• **Emery, Pascal**
**91120, PALAISEAU (FR)**
• **Navarro, Marcos**
**75014, PARIS (FR)**

(54) **Procédé de détermination d'un début de combustion dans un moteur à combustion interne**

(57)    L'invention concerne un procédé de détermination du début de combustion d'un carburant lors de son injection dans l'un des cylindres d'un moteur à combustion interne, au cours des cycles de déplacement d'un piston dans ledit cylindre.

Ce procédé est remarquable en ce qu'il consiste à :
a) enregistrer les différentes valeurs de la pression $P_{\theta n}$ dans la chambre de combustion dudit cylindre, en différentes positions angulaires successives $\theta$ que prend le vilebrequin et ce, sur **N** cycles consécutifs de fonctionnement, **N** étant un entier supérieur ou égal à 2,
b) calculer, pour position angulaire, la pression moyenne $Pm_{\theta x}$ dans cette même chambre sur **x** cycles de fonctionnement, **x** étant un entier supérieur ou égal à 1 et inférieur ou égal à **N**,
c) au cycle de rang **N+1**, pour une position angulaire $\theta$ donnée, comparer la valeur absolue de l'écart $P_{\theta N+1}$ - $Pm_{\theta x}$ entre la pression audit cycle de rang **N+1** et ladite pression moyenne $Pm_{\theta x}$, à une valeur **S**,
d) si celle-ci est supérieure à S, enregistrer la valeur correspondante de l'angle de vilebrequin $\theta$ comme étant celle du début de combustion pour le cycle **N+1**.

**FIG. 5**

EP 2 011 981 A2

**Description**

L'invention se situe dans le domaine des moteurs rotatifs à combustion interne (essence ou Diesel), à injection directe ou indirecte de carburant, à au moins un cylindre.

L'invention concerne plus précisément la détermination du début de la combustion d'un carburant lors de son injection dans l'un des cylindres de ce type de moteur.

Les normes anti-pollution devenant de plus en plus sévères sur les moteurs automobiles, il est important pour les constructeurs automobiles de bien maîtriser la phase de combustion dans leurs moteurs. En effet, ceci permet de limiter les émissions polluantes, sans négliger pour autant la consommation en carburant de ces moteurs et leurs performances. Il est donc important de bien connaître cette phase et ses caractéristiques.

De nombreuses stratégies de contrôle du moteur par le calculateur de contrôle visent à bien piloter la combustion via l'injection du carburant.

Or, celle-ci est tributaire de la qualité des actionneurs utilisés. Les écarts dus aux tolérances de fabrication des injecteurs et surtout leur dérive au cours du temps sont problématiques.

En observe ainsi de grands écarts en termes de pollution et de performance d'un moteur à un autre et surtout d'un cylindre à un autre.

De ce fait, pour piloter correctement l'injection, on définit des marges importantes sur les réglages, lors de la mise au point du moteur. Cela a pour effet de dégrader les performances globales de ce dernier.

L'invention a pour but de remédier à ces problèmes.

La détection du début de combustion peut également servir dans des d'estimation ou de régulation du bruit du moteur, d'optimisation du couple par régulation du placement de la combustion dans le cycle thermodynamique du moteur.

Cette détection peut également servir à recaler les caractéristiques des injecteurs pour ajuster au mieux les quantités de carburant injectées ou à identifier avec précision la nature du carburant embarqué. Cela passe encore une fois par une meilleure connaissance du système d'injection.

Il est important de connaître le délai entre l'injection et l'instant où débute la combustion, c'est-à-dire l'instant où commencent les réactions chimiques irréversibles qui correspondent à la transformation de l'énergie chimique en énergie mécanique.

Ce délai est important, car il conditionne le phasage de la combustion dans le cycle thermodynamique, par rapport à une consigne d'avance à l'injection donnée. Une combustion mal phasée entraînera une élévation des émissions polluantes.

Il est donc très important de déterminer le début de la combustion. C'est un paramètre de première importance sur le rendement du cycle thermodynamique et donc sur le couple moteur. Ce paramètre agit aussi sur le rendement de la combustion.

En pratique, plutôt que de parler de l'instant de début de combustion, on parle plutôt "d'angle de début de combustion". En d'autres termes, plutôt que de prendre le temps comme repère, on préfère déterminer la position angulaire (ou angle) du vilebrequin à l'instant où la combustion commence, par rapport à une origine qui est, par exemple, la position où le piston est au point mort haut (ci après "PMH").

L'invention a pour but d'estimer en temps réel, sur un moteur essence ou Diesel, cet angle de début de combustion (encore noté "SOC", d'après l'acronyme de l'expression anglaise *"Start Of Combustion"*).

Aujourd'hui, le début de combustion est rarement estimé en ligne, sur un moteur implanté dans un véhicule. Lorsque cette détection est effectuée, elle l'est grâce à des méthodes numériques, basées sur des principes thermodynamiques ou de traitement numérique du signal. Ces méthodes différent de celles de l'invention, par la nature des calculs servant à détecter le "SOC".

Le procédé décrit dans le document WO 2002/48522 utilise la dérivée de la pression de la combustion pour détecter le "SOC", par comparaison à un seuil. C'est une méthode simple mais peu fiable. L'application d'une valeur de seuil est rendue difficile par plusieurs phénomènes. En effet, l'opération de dérivation du signal de pression entraîne l'amplification du bruit de mesure. Ce bruit est présent sur le signal pendant toute la phase de compression et impose des contraintes dans le choix de la valeur de seuil.

En outre, l'élévation rapide de la pression, due à la simple compression des gaz enfermés dans la chambre de combustion, engendre une valeur de dérivée non négligeable, et impose également des contraintes supplémentaires sur la valeur de seuil. De plus cette élévation normale de la pression pendant la phase de compression dépend du point de fonctionnement du moteur, c'est-à-dire de la pression et de la température des gaz admis, de la température des parois de la chambre de combustion, de la masse admise, etc.

De ce fait, lors de combustions peu vives, le pic de la dérivée dû à la combustion peut inférieur au pic de la dérivée dû à la compression.

L'angle de début de combustion (SOC) est donc par conséquent difficilement identifiable par cette méthode.

Un autre procédé, décrit dans le brevet US-5 359 883, est basé sur le calcul du rapport des fonctions logarithmes de pression et de volume. Le calcul de ce rapport permet de détecter un changement de comportement du coefficient polytropique $\gamma$. Ce coefficient est à peu près constant pendant la phase de compression du cycle thermodynamique du moteur. Puis la de combustion, le comportement du coefficient polytropique change, ce qui se traduit par un changement de pente du tracé du cycle. Cette rupture de pente peut être détectée, par exemple en appliquant un seuil sur la grandeur :

$$\frac{d}{dt}\left[\frac{\log \rho}{\log v}\right]$$

Cependant ce procédé engendre un bruit de important.

Le document US-2003/0145829 propose de détecter le commencement de la phase de combustion, en étudiant le profil de la pression dans le cylindre et en appliquant au signal obtenu une transformation en ondelettes. Ce procédé est particulièrement lourd à mettre oeuvre et nécessite un temps de calcul élevé, ce qui rend son utilisation à bord d'un véhicule très difficile.

D'autres procédés détectent le début de combustion, non pas à l'aide d'un capteur de pression mais grâce un accéléromètre. On pourra se reporter à ce sujet aux documents WO 02/25237 et EP-1 092 968.

Ces procédés sont toutefois peu précis et nécessitent un traitement du signal plus complexe. En effet, un accéléromètre placé sur le moteur capte également toute de signaux parasites, telles que les ouvertures et les fermetures de soupapes par exemple.

L'invention a pour objet d'éviter les inconvénients précités de l'état de la technique et notamment de fournir un procédé simple de détection du début de combustion, qui évite la mise en oeuvre de calculs complexes et l'apparition de phénomènes de bruits de calculs, et ce, à partir de capteurs de pression placés dans la chambre de combustion.

A cet effet, l'invention concerne un procédé de détermination du début de combustion d'un carburant lors de son injection dans l'un des cylindres d'un moteur à combustion interne, au cours des cycles de déplacement d'un piston ledit cylindre.

Conformément à l'invention, ce procédé comprend les étapes suivantes consistant à :

a) mesurer et enregistrer les différentes valeurs de la pression $P_{\theta n}$ régnant dans la chambre de combustion (3) dudit cylindre, en différents points de mesure correspondant respectivement à différentes positions angulaires successives θ que prend le vilebrequin (9) actionnant ledit piston (5), et ce, sur **N** cycles consécutifs de fonctionnement, **N** étant un entier supérieur ou égal à 2 et n indiquant le rang du cycle considéré,

b) calculer, pour chacun des différents points de mesure précités, la pression moyenne $Pm_{ex}$ régnant dans cette même chambre de combustion (3) sur **x** cycles de fonctionnement, **x** étant un entier supérieur ou égal à 1 et inférieur ou égal à **N,**

c) au cycle de rang **N+1,** calculer, pour un point de mesure correspondant à une position angulaire θ donnée, l'écart $P_{\theta N+1} - Pm_{\theta x}$ entre la pression régnant dans la chambre de combustion audit cycle de rang **N+1** et ladite pression moyenne $Pm_{\theta x,}$

d) comparer $| P_{\theta N+1} - Pm_{\theta x} |$ à une valeur seuil **S,**

e) s'il s'avère que $|P_{\theta N+1} - Pm_{\theta x}|$ est supérieur à **S**, enregistrer la valeur de l'angle de vilebrequin θ à laquelle ce seuil a été dépasse, comme étant la valeur angulaire du début de combustion pour le cycle **N+1** considéré, et si ce n'est pas le cas, recommencer les c) et d) pour le point de mesure suivant correspondant à la position angulaire suivante θ + Δθ.

Selon d'autres caractéristiques avantageuses et non limitatives de l'invention, prisent seules ou en combinaison :

- pour chacun des différents points de mesure θ précités, la moyenne $Pm_{\theta x}$ des pressions qui règnent dans la chambre de combustion du cylindre est calculée sur **x** cycles de fonctionnement immédiatement antérieurs au cycle de rang **N+1** considéré, **x** étant un entier inférieur ou égal à **N** et supérieur ou égal à 1.
- **x** est supérieur ou égal à 10 ;
- **x** est égal à 1 ;
- le seuil **S** est une valeur fixe ou déterminée à partir d'une cartographie moteur ;
- les différentes positions angulaires successives θ que prend le vilebrequin actionnant ledit piston sont espacées au maximum d'un degré d'angle.

Procédé selon l'une des revendications précédentes, caractérisé en ce que les différentes positions angulaires successifs θ que prend le vilebrequin (9) actionnant ledit piston (5) sont espacées au maximum d'un degré d'angle.

D'autres caractéristiques et avantages de l'invention apparaîtront de la description qui va maintenant en être faite en référence aux dessins annexés, qui en représentent à titre indicatif mais non limitatif, un mode de réalisation possible.

Sur ces dessins :

- la figure 1 représente schématiquement une vue en coupe d'un cylindre d'un moteur à combustion en fonctionnement,
- la figure 2 est un graphique représentant l'acquisition des données de pression **P** d'un cylindre, en différents points de mesure correspondant à différentes positions angulaires θ du vilebrequin, et ce, pour **N** cycles consécutifs,
- la figure 3 représente la moyenne glissante du signal de pression de cylindre, en fonction de l'angle de rotation θ du vilebrequin,
- la figure 4 représente les écarts des signaux de pression sur un cycle donné, par rapport à la moyenne glissante, en fonction de l'angle de rotation du vilebrequin, et
- la figure 5 est un organigramme représentant les différentes étapes du procédé de détermination du début de combustion conforme à l'invention.

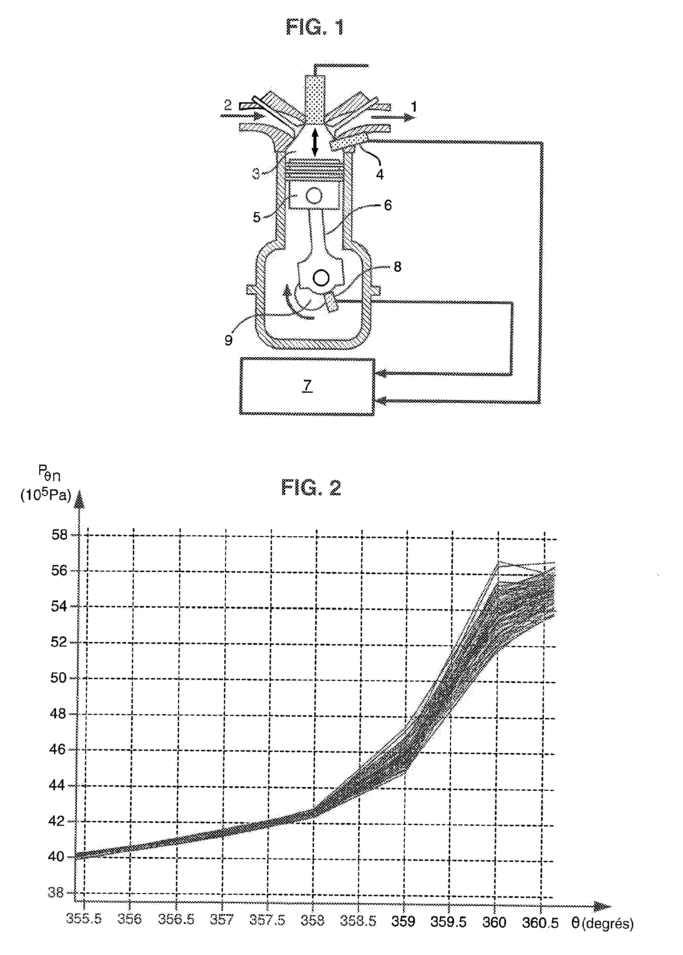

En référence à la figure 1, on peut voir un moteur à combustion interne, Diesel ou essence, qui comporte un piston mobile 5 relié à un vilebrequin 9 par l'intermédiaire d'une bielle 6, une chambre de combustion 3, un dispositif d'admission des gaz 2 et un dispositif d'échappement des gaz 1.

En outre, le dispositif comprend :

- un moyen de mesure 8, apte à mesurer la position angulaire θ (angle de rotation) du vilebrequin 9 par rapport à un repère,
- un capteur de pression 4 placé dans la chambre de combustion 3, et
- des moyens de traitement de données 7, aptes à recevoir les signaux provenant dudit capteur de pression 4 et dudit moyen de mesure 8, à les synchroniser pour pouvoir les corréler et traiter ces signaux, de façon à mettre en oeuvre le procédé conforme à l'invention.

Le principe général de l'invention consiste à comparer, pour chaque cylindre d'un moteur, l'écart entre l'allure du signal de pression à l'intérieur de la chambre de combustion 3 de ce cylindre pour un cycle donné, avec un signal de pression de référence établit précédemment. Dès que cet écart dépasse un seuil **S** prédéterminé, on identifie le début de la combustion.

Au cours d'un cycle thermodynamique complet d'un moteur à combustion, le vilebrequin 9 effectue un ou plusieurs tours en fonction du nombre de cylindres dudit moteur.

A des fins de simplification, la suite de la description est sur un moteur à quatre cylindres. Au cours d'un cycle thermodynamique, le vilebrequin 9 effectue deux tours complets et les quatre phases se déroulant dans la chambre de combustion 3 sont : l'admission, la compression, la combustion et l'échappement.

Toutefois, le procédé conforme à l'invention n'est pas limité à un moteur à quatre cylindres et peut être utilisé dans un moteur en ayant plus ou moins.

La première du procédé consiste à acquérir, pour un cylindre particulier, une série de couples de données, au cours de **N** cycles thermodynamiques du fonctionnement du moteur.

Chaque couple de données correspond à la valeur de la pression régnant dans la chambre de combustion 3, associée à la position angulaire θ occupée par le vilebrequin 9 à l'instant où cette mesure de pression est faite.

L'acquisition de ce couple de données se fait en différents points de mesure successifs qui correspondent respectivement à différentes positions angulaires θ que prend le vilebrequin 9 actionnant le piston 5.

Sur les figures et dans la suite de la description, ces différentes positions angulaires évoluent entre 0° et 720°, ce qui correspond à deux tours du vilebrequin 9.

Les valeurs 0°, 360° et 720° correspondent à la position où le piston 5 est au point mort haut ("PMH").

La combustion a lieu au voisinage de 360°, c'est-à-dire lorsque le piston 5 a fini d'effectuer son premier tour et commence le second.

La position angulaire θ du vilebrequin 9 est fournie par les moyens de mesure 8 et la pression régnant dans 1a chambre de combustion 3, par le capteur de pression 4.

Cette pression est notée ci-après $P_{\theta n}$, θ représentant la position angulaire du vilebrequin et **n** le numéro ou rang du cycle thermodynamique considéré.

L'acquisition de ces données est répétée sur **N** cycles successifs de fonctionnement du moteur, **N** étant un entier supérieur ou égal à deux, **n** pouvant varier de 1 à **N**.

De préférence et de façon à avoir des résultats les plus précis possible, les différentes positions angulaires successifs θ que prend le vilebrequin 9 actionnant ledit piston 5 sont espacées au maximum d'un degré d'angle.

La figure 2 illustre un exemple des résultats obtenus. Les relevés sont effectués tout les demis degrés d'angle.

Sur cette figure, on a représenté en ordonnée les différentes valeurs de pression $P_{\theta n}$ de cylindre exprimées en Pascals, pour différents de rotation θ du vilebrequin compris entre 355,5° et 360,5°, et ce, sur **N** de cycles consécutifs.

La deuxième étape du procédé consiste ensuite à calculer, pour chacun des différents points de mesure précités, c'est-à-dire chacune des positions angulaires successives θ, la pression moyenne régnant dans la chambre de combustion 3 dudit cylindre sur **x** cycles de fonctionnement, **x** étant un entier supérieur ou égal à 1 et inférieur ou égal à **N**.

Cette pression moyenne est notée : $Pm_{\theta x}$

L'intérêt de calculer la moyenne sur un nombre de cycles **x** inférieur à **N** est que l'on en temps de réponse.

Lorsque **x** = 1, la moyenne $Pm_{\theta x}$ n'en est pas une à proprement parlé, correspond à la pression régnant dans la chambre de combustion à une position θ donnée et sur un cycle particulier, par exemple le cycle **N**.

Inversement lorsque **x** est égal à **N**, la valeur de pression obtenue correspond à la moyenne de toutes les pressions enregistrées sur les **N** cycles.

Comme cela sera expliqué ultérieurement, cette moyenne sera ensuite comparée à une valeur de pression au cycle **N+1**.

En conséquence, on peut choisir de faire une moyenne sur un petit nombre de cycles antérieurs au cycle **N+1,** si l'on souhaite obtenir une mesure plus sensible.

Inversement, il est également possible d'effectuer une moyenne sur un grand nombre de cycles antérieurs au cycle **N+1,** de façon à être moins sensible aux erreurs.

En pratique, **x** est généralement égal à 10 voire supérieur, par exemple voisin de 50.

De préférence, la pression moyenne est calculée sur un nombre fixe de cycles immédiatement antérieurs au cycle **N+1** considéré, ce nombre de cycles **x** étant de préférence faible pour diminuer le temps de réponse. On obtient une moyenne glissante de pression sur un certain nombre de cycles thermodynamiques consécutifs. Cette façon de faire est plus fiable face à un changement du comportement du moteur.

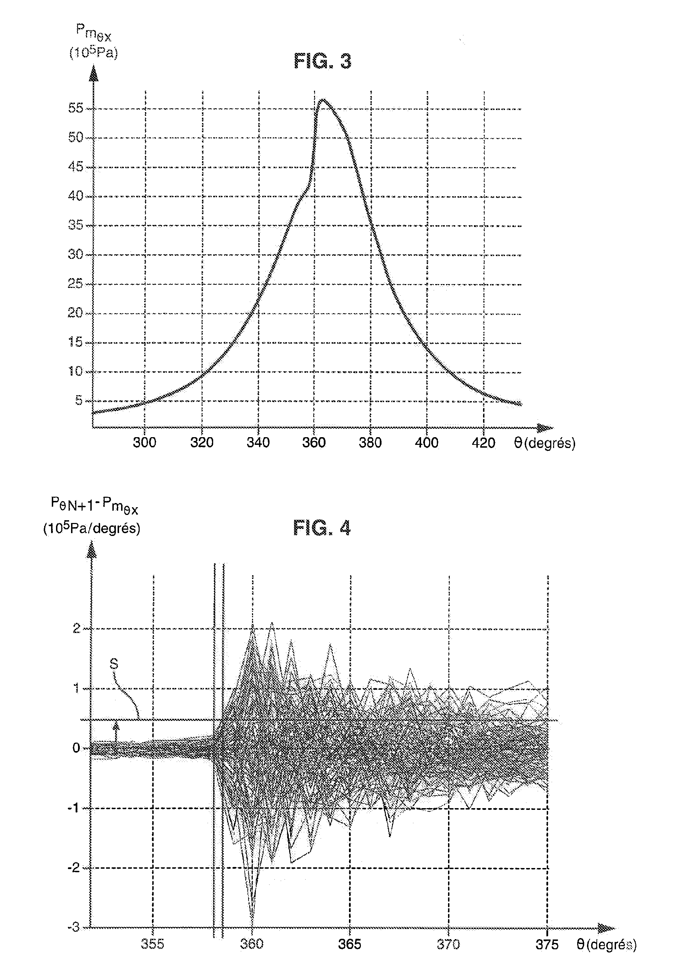

Un exemple de ce type de résultats est illustré sur la figure 3 jointe, qui représente en ordonnées la pression moyenne $Pm_{\theta x}$ dans la chambre de combustion 3 du cylindre, en fonction de positions angulaires successives θ s'étendant entre 300° et 420°. On constate que le pic de pression qui correspond au début de la combustion, est voisin de 360°.

La troisième étape du procédé consiste ensuite à calculer au cycle **N+1,** pour un premier point de mesure correspondant à une position angulaire θ particulière, l'écart entre la pression régnant dans la chambre de combustion audit cycle de rang **N+1** et ladite pression moyenne calculée précédemment. Cet écart est noté $P_{\theta N+1}$ - $Pm_{\theta x}$.

A titre d'exemple purement illustratif, on peut ainsi calculer l'écart entre la pression de cylindre au cycle de rang 25 et à la position angulaire de 359°, avec la pression moyenne sur les dix cycles immédiatement antérieurs numéros 15 à 24, à cette même position angulaire de 359°.

Un exemple de résultats de mesures obtenues est représenté sur la figure 4. Celle-ci représente en ordonnées l'écart $P_{\theta N+1}$ - $Pm_{\theta x}$ exprimé en $10^5 Pa$ par degré d'angle et en abscisses les différentes positions angulaires du vilebrequin entre 355° et 375°.

On compare ensuite la valeur absolue de cet écart, c'est-à-dire $|P_{\theta N+1}-Pm_{\theta x}|$ à une valeur seuil **S**.

Le seuil **S** peut-être fixe ou être issu d'une cartographie moteur obtenue au cours de tests précédents, effectués lorsque le moteur est sur un banc d'essai. Cette cartographie est fonction, par exemple, des paramètres d'injection du moteur et de la quantité de carburant injectée ou de la charge du moteur. La valeur seuil **S** peut également être sur une expérimentation préalable.

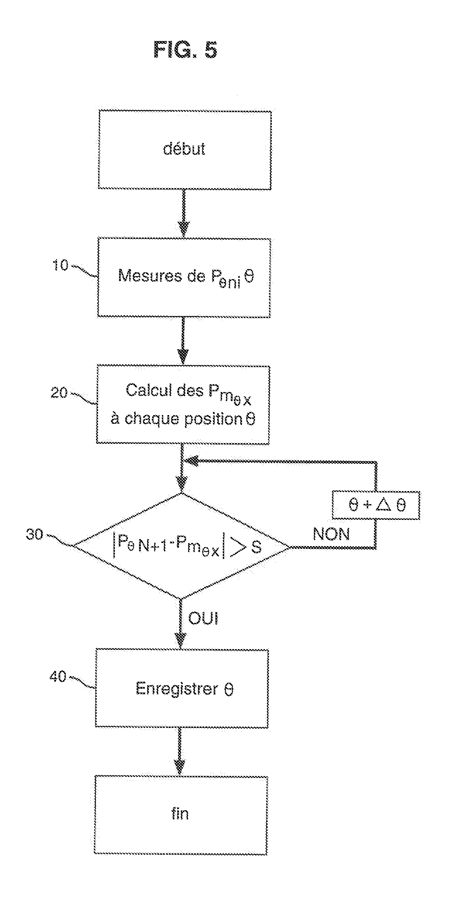

Les différentes étapes qui viennent d'être décrites se retrouvent sur l'algorithme représenté sur la figure 5.

Les étapes d'acquisition des mesures, de calcul de la pression moyenne, et de comparaison de la valeur absolue de l'écart entre une pression donnée et cette moyenne à une valeur **S** sont représentées respectivement par les étapes 10, 20 et 30 de la figure 5.

S'il s'avère à l'issue de l'étape 30 que la valeur absolue $|P_{\theta N+1}$ - $Pm_{\theta x}|$ est supérieure à **S**, alors on considère que la combustion à commencé et l'on enregistre la valeur de l'angle de vilebrequin θ à laquelle ce seuil a été dépassé, comme la valeur angulaire de début de combustion pour le cycle **N+1** considéré. Cette étape est représentée en 40. On continue d'enregistrer les valeurs de pression $P_{\theta N+1}$ et d'angle θ pour les points de mesure suivants, mais on cesse d'effectuer l'étape 30. On attend le début du cycle suivant (c'est-à-dire le cycle de rang **N+2**), pour recommencer les étapes de calcul 20 et 30 précitées.

Si on contraire, la valeur absolue $|P_{\theta N+1}$- $Pm_{\theta x}|$ n'est pas supérieure à **S,** alors on réitère l'étape de comparaison 30 sur le point de mesure suivant correspondant à la position angulaire suivante θ + Δθ, et l'on vérifie si $|P_{\theta+\Delta\theta\ N+1}$ - $Pm_{\theta x+\Delta\theta}|$ est supérieur à **S**. On recommence jusqu'à arriver au moment où la valeur seuil **S** est dépassée.

Le procédé de détermination de début de combustion conforme à l'invention présente l'avantage de ne pas engendrer de calculs particulièrement coûteux et notamment de ne pas nécessiter le calcul de grandeurs thermodynamiques telles que le dégagement énergique.

Les calculs sont en effet limités puisque dès que l'inéquation de l'étape 30 se vérifie, on enregistre la valeur θ et l'on reprend les calculs au cycle suivant.

En ce qui concerne les stratégies d'estimation de régulation du bruit, le procédé conforme à l'invention est particulièrement utile, car il résout le problème du fenêtrage, surtout lors d'une combustion homogène, pour les moteurs dit "HCCI".

En effet, les systèmes de mesure du bruit de combustion basés sur l'observation de la dérivée de la pression dans la chambre de combustion (décrits dans le brevet FR-2 857 410) sont contraints d'observer la pression dans une fenêtre temporelle ouverte au moment de l'injection du carburant, afin de ne pas confondre le gradient de pression dû à la combustion avec le gradient de pression naturelle, dû à la compression du gaz dans la chambre. Ces systèmes ne sont pas non plus utilisables avec des moteurs HCCI, car dans ce type de moteur l'injection est très précoce dans le cycle thermodynamique et ne peut servir à déclencher l'ouverture de cette fenêtre d'observation.

Enfin, bien que le procédé conforme à l'invention puisse être utilisé dans la mise au point des moteurs sur les bancs d'essai, il sera surtout très utile dans les systèmes de contrôle moteur embarqués.

**Revendications**

1. Procédé de détermination du début de combustion d'un carburant lors de son injection l'un des cylindres d'un moteur à combustion interne, au cours des cycles de déplacement d'un piston (5) dans ledit cylindre, ce procédé comprenant les étapes suivantes consistant à :

   a) mesurer et enregistrer les différentes valeurs de la pression $P_{\theta n}$ régnant dans la chambre de combustion (3) dudit cylindre, en différents points de mesure correspondant respectivement à différentes positions angulaires successives θ que prend le vilebrequin (9) actionnant ledit piston (5), et ce, sur **N** cycles consécutifs de fonctionnement, **N** étant un entier supérieur ou égal à 2 et **n** indiquant le rang du cycle considéré,

b) calculer, pour chacun des différents points de mesure précités, la pression moyenne $Pm_{\theta x}$ régnant dans cette même chambre de combustion (3) sur **x** cycles de fonctionnement, **x** étant un entier supérieur ou égal à 1 et inférieur ou égal à **N**,

c) au cycle de rang **N+1,** calculer, pour un point de mesure correspondant à une position angulaire $\theta$ donnée, l'écart $P_{\theta N+1} - Pm_{\theta x}$ entre la pression régnant dans la chambre de combustion audit cycle de rang **N+1** et ladite pression moyenne $Pm_{\theta x}$,

d) comparer $|P_{\theta N+1} - P_{m\theta x}|$ à une valeur seuil **S**,

e) s'il s'avère que $|P_{\theta N+1} - Pm_{\theta x}|$ est supérieur à **S**, enregistrer 1a valeur de l'angle de vilebrequin $\theta$ à laquelle ce seuil a été dépassé, comme étant la valeur angulaire du début de combustion pour le cycle **N+1** considéré, et si ce n'est pas le cas, recommencer les c) et d) pour le point de mesure suivant correspondant à la position angulaire suivante $\theta + \Delta\theta$.

2. Procédé selon la revendication 1, **caractérisé en ce que** pour chacun des différents de mesure $\theta$ précités, la moyenne $Pm_{\theta x}$ des pressions qui règnent dans la chambre de combustion (3) du cylindre est calculée sur **x** cycles de fonctionnement immédiatement antérieurs au cycle de rang **N+1** considéré, **x** étant un entier inférieur ou égal à **N** et supérieur ou égal à 1.

3. Procédé selon la revendication 1 ou 2, **caractérisé en ce que x** est supérieur ou égal à 10.

4. Procédé selon la revendication 1 ou 2, **caractérisé en ce que x** est égal à 1.

5. Procédé selon l'une des revendications précédentes, **caractérisé en ce que** le seuil **S** est une valeur fixe ou déterminée à partir d'une cartographie moteur.

6. Procédé selon l'une des revendications précédentes, **caractérisé en ce que** les différentes positions angulaires successives $\theta$ que prend le vilebrequin (9) actionnant ledit piston (5) sont espacées au maximum d'un degré d'angle.

# FIG. 1

# FIG. 2

Pm_θx
(10^5 Pa)

**FIG. 3**

300    320    340    360    380    400    420    θ (degrés)

P_θN+1 - Pm_θx
(10^5 Pa/degrés)

**FIG. 4**

355    360    365    370    375    θ (degrés)

# FIG. 5

```
                    ┌──────────────┐
                    │    début     │
                    └──────┬───────┘
                           │
                           ▼
            ┌────────────────────────────┐
      10 ───┤      Mesures de P_θni θ     │
            └──────────────┬─────────────┘
                           │
                           ▼
            ┌────────────────────────────┐
      20 ───┤     Calcul des P_mθx        │
            │    à chaque position θ      │
            └──────────────┬─────────────┘
                           │      ┌──────────────┐
                           │◄─────┤  θ + △ θ     │
                           ▼      └──────┬───────┘
                      ◇◇◇◇◇◇◇◇◇◇◇◇◇       │
      30 ───◇ |P_θ N+1 - P_mθx| > S ◇─────┘ NON
                      ◇◇◇◇◇◇◇◇◇◇◇◇◇
                           │ OUI
                           ▼
            ┌────────────────────────────┐
      40 ───┤      Enregistrer θ          │
            └──────────────┬─────────────┘
                           │
                           ▼
            ┌────────────────────────────┐
            │            fin             │
            └────────────────────────────┘
```

9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200248522 A
- US 5359883 A
- US 20030145829 A
- WO 0225237 A
- EP 1092968 A
- FR 2857410